# EUROPEAN PATENT SPECIFICATION

(11) **EP 2 433 832 B1**
(45) Date of publication and mention of the grant of the patent: **24.10.2018**
(21) Application number: 10777611.4
(22) Date of filing: 12.03.2010
(51) Int. Cl.: B60N 2/90, B60N 2/28

(54) **CHILD SEAT**
KINDERSITZ
SIÈGE POUR ENFANT

(30) Priority: 21.05.2009 JP 2009123345
(43) Date of publication of application: 28.03.2012
(73) Proprietor: Joyson Safety Systems Japan K.K., Shinagawa-ku Tokyo (JP)
(72) Inventor: YAMANISHI, Takahiro, Tokyo 107-8508 (JP)
(74) Representative: Banzer, Hans-Jörg
(86) International application number: PCT/JP2010/054198
(87) International publication number: WO 2010/134375

(56) References cited:
- CA-A1- 2 271 527
- DE-A1- 2 021 716
- DE-A1- 2 033 708
- JP-A- 2000 177 451
- JP-A- 2004 130 996
- JP-A- 2008 296 691
- JP-U- 63 172 347
- US-A- 5 260 684
- US-A- 5 260 684
- US-A- 6 126 233

## Description

### Technical Field

The present invention relates to a child seat that is installed on a seat of an automobile, and in particular, relates to a child seat that is secured using a seat belt of a seat belt device of the automobile.

### Background Art

A variety of structures that secure a child seat installed on a seat of an automobile to the seat are proposed. One such example is described in Japanese Unexamined Patent Application Publications No. 2004-130996 and No. 2003-252094 . According to these documents, a seat belt of a seat belt device of an automobile is routed through belt routing openings provided on the child seat in order to secure the child seat.

Japanese Unexamined Patent Application Publication No. 2004-130996 discloses a structure in which the seat belt routed through a rear side of the child seat is hooked to a slit of a retractor shaft. The retractor shaft is rotated so as to retract the seat belt on the retractor shaft. Thus, tensile force is applied to the seat belt.

Japanese Unexamined Patent Application Publication No. 2003-252094 discloses a child seat that can be installed on a seat of an automobile so as to face a forward direction or a rear direction of the automobile. The child seat is equipped with a bottom block at its bottom portion. The position of the bottom block can be changed such that, regardless of whether the child seat is installed so as to face the forward direction or the rear direction, the bottom block is positioned on the rear side of the automobile in the bottom portion.

In addition, US 5,260,684 A discloses a child seat according to the preamble of claim 1. In more detail, this document discloses a child warning system for use in an integrated or portable child restraining seat that includes an occupancy indicator, an emergency signal and warning indicators, wherein an electrical circuit provides a warning indication until deactuation switches are actuated to deactuate the warning indicators.

### Summary of Invention

### Technical Problem

When the child seat is placed on the seat of an automobile, a space behind the child seat may be dark because the child seat may block the interior light of the automobile. This may make it difficult to route the seat belt around the child seat.

An object of the present invention is to provide a child seat that allows a seat belt to be easily routed along the child seat when the child seat is placed on a seat and secured using the seat belt.

### Solution to Problem

According to the invention, a child seat as defined in claim 1 is provided. The dependent claims define preferred and/or advantageous embodiments of the invention.

A child seat of a first embodiment is mounted on a seat of an automobile by routing a seat belt of the automobile through a seat belt routing region. The child seat includes a lighting device that illuminates at least part of the seat belt routing region. The child seat further includes a child seat body that has a seat portion and a backrest portion, and a base that supports the child seat body. Hereby, the lighting device is disposed so as to illuminate at least a rear side of the backrest portion.

In the child seat of a second embodiment, the child seat according the first embodiment further includes a retractor member that is disposed at the rear side of the backrest portion and that retracts the seat belt in order to apply tensile force to the seat belt. In the child seat of the second embodiment, the lighting device is disposed so as to illuminate at least an engagement portion of the retractor member that is engaged with the seat belt.

In the child seat of a third embodiment, the child seat according to any one of the first to second embodiments further includes a switch that causes the lighting device to start lighting, and light controlling means that causes the lighting device to be turned off when the routing of the seat belt is complete, or after a specified period of time has elapsed from a time when the switch is operated.

In the child seat of a fourth embodiment, the child seat according to any one of the first to third embodiments has a plurality of belt routing portions through which the seat belt of the automobile is routed in order to mount the child seat on the seat of the automobile. In the child seat of the fourth embodiment, a light-emitting body is provided, the light-emitting body is turned on, in mounting the child seat on the seat of the automobile, so as to indicate the belt routing portion through which the seat belt is to be routed.

In the child seat of a fifth embodiment, the child seat according to the third embodiment has a plurality of belt routing portions through which the seat belt of the automobile is routed in order to mount the child seat on the seat of the automobile. In the child seat of the fifth embodiment, light-emitting body is provided. The light-emitting body is turned on, in mounting the child seat on the seat of the automobile, so as to indicate the belt routing portion through which the seat belt is to be routed. In this case, the child seat includes light-emitting body controlling means that causes the light-emitting body to be turned on when the switch is operated.

In the child seat of a sixth embodiment, the child seat according to the fifth embodiment further includes belt detection devices provided for respective belt routing portions. In the child seat of the sixth embodiment, the light-emitting body controlling means controls the light-emitting bodies such that the light-emitting body controlling means first causes the light-emitting body corresponding to the first belt routing portion, through which the seat belt is first to be routed, to be turned on. In this case, the light-emitting body controlling means causes, when the belt detection device for the first belt routing portion detects that the seat belt has been routed through the first belt routing portion, the light-emitting body corresponding to the first belt routing portion to be turned off. The light-emitting body controlling means then causes the light-emitting body corresponding to the second belt routing portion to be turned on. The second belt routing portion is a belt routing portion through which the seat belt is next to be routed. The light-emitting body controlling means causes the light-emitting body corresponding to the second belt routing portion to be turned off when the belt detection device for the second belt routing portion detects that the seat belt has been routed through the second belt routing portion.

In the child seat of an seventh embodiment, the child seat according to the sixth embodiment further includes installation direction detecting means that detects whether the child seat is installed so as to face a forward direction or a rear direction of the automobile. As the belt routing portions, the child seat of the seventh embodiment includes a belt routing portion for a forward-facing installation through which the seat belt is routed when the child seat is installed so as to face a forward direction, and a belt routing portion for a rear-facing installation through which the seat belt is routed when the child seat is installed so as to face a rear direction. In the child seat of the seventh embodiment, the light-emitting body controlling means causes, in accordance with an installation direction detected by the installation direction detecting means, either of the light-emitting body for the belt routing portion for the forward-facing installation and the light-emitting body for the belt routing portion for the rear-facing installation to be turned on.

A child seat of a eighth embodiment includes a seat portion in which a child is seated, a webbing for a child that restrains the child seated in the seat portion, a tongue that is provided in the webbing for a child, and a buckle into which the tongue is inserted so as to be latched. The child seat of the eighth embodiment also includes a light-emitting body that is provided in the buckle, and means for controlling buckle light-emitting body that causes the light-emitting body to be turned on from a time when the child is seated in the seat portion to a time when a specified period of time has elapsed, or to a time when the tongue is latched.

### Advantageous Effects of Invention

In the child seat of the first embodiment, when the child seat is mounted on the seat of the automobile using the seat belt, at least part of the seat belt routing region can be illuminated with a lighting device. This facilitates the routing of the seat belt.

In the child seat of the first embodiment, the rear side of the backrest portion is illuminated. This facilitates the routing of the seat belt on the rear side of the backrest portion.

In the child seat of the second embodiment, the engagement portion of the retractor member that is engaged with the seat belt on the rear side of the backrest portion is illuminated using the lighting device. This facilitates an operation in which the seat belt is engaged with the engagement portion of the retractor member.

In the child seat of the third embodiment, the lighting device is turned off when the routing of the seat belt is complete, or after a specified period of time has elapsed from a time when the lighting device is turned on. This prevents a power source of the lighting device from being wasted. When the child seat is configured such that the lighting device is turned off when the routing of the seat belt is complete, the fact that the routing of the seat belt is complete is recognizable due to turning off of the lighting device.

In the child seat of the fourth and fifth embodiments, the belt routing portions through which the seat belt is to be routed are indicated by turning on of the light-emitting bodies. Thus, when routing the seat belt through the belt routing portions after the child seat has been installed on the seat of the automobile, the belt routing portions through which the seat belt is to be routed are very easily recognizable. In particular, in the child seat of the fourth embodiment, when the switch is operated in order to turn on the lighting device, the light-emitting bodies are also turned on. Thus, the routing of the seat belt can be smoothly started.

In the child seat of the sixth embodiment, when the switch is operated, the light-emitting body corresponding to the first belt routing portion is initially turned on. When the seat belt has been routed through the first belt routing portion, the light-emitting body corresponding to the first belt routing portion is turned off, and the light-emitting body corresponding to the second belt routing portion is turned on. Thus, when routing the seat belt through the belt routing portions, a series of operational procedure, in which the seat belt is initially routed through the first belt routing portion and then through the second belt routing portion, can be easily performed.

In the child seat of the seventh embodiment, when the child seat is installed so as to face the forward direction of the automobile, the light-emitting body for the belt routing portion for the forward-facing installation is turned on. When the child seat is installed so as to face the rear direction, the light-emitting body for the belt routing portion for rear-facing installation is turned on. Thus, regardless of whether the child seat is directed forward or rearward, the belt routing portion through which the seat belt is to be routed is easily recognizable.

In the child seat of the eighth embodiment, when the child is seated in the seat portion, the light-emitting body for a buckle is turned on. Thus, it is recognizable that the tongue for restraining a child is to be inserted into the buckle.

### Brief. Description of Drawings

[Fig. 1] Fig. 1a is a perspective view of a child seat according to an embodiment, and Fig. 1b is a vertical sectional view of a part where a lighting device is installed.
[Fig. 2] Figs. 2a and 2b are perspective views of the child seat according to the embodiment.
[Fig. 3] Fig. 3 is a perspective view illustrating a back portion of a child seat body according to the embodiment.
[Fig. 4] Figs. 4a and 4b are sectional views illustrating a mounting structure of a limit switch.
[Fig. 5] Fig. 5 is a perspective view of the child seat that is installed so as to face a forward direction.
[Fig. 6] Fig. 6 is a perspective view of the child seat that is installed so as to face a rear direction.
[Fig. 7] Fig. 7 is a front view of tongues for a child and a buckle.
[Fig. 8] Fig. 8 is a perspective view of the buckle.
[Fig. 9] Fig. 9 is a sectional view of a seating detection device.
[Fig. 10] Fig. 10 is a perspective view of a child seat according to another embodiment.
[Fig. 11] Fig. 11 is a perspective view of the child seat illustrated in Fig. 10 with which the seat belt is engaged.

### Description of Embodiments

Embodiments will be described below with reference to the drawings.

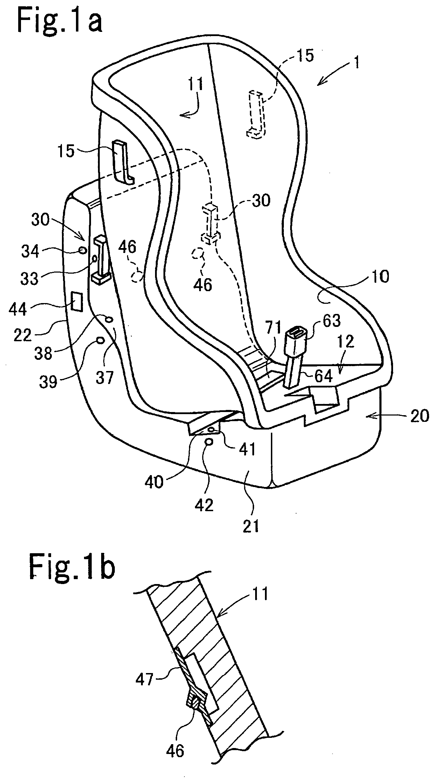

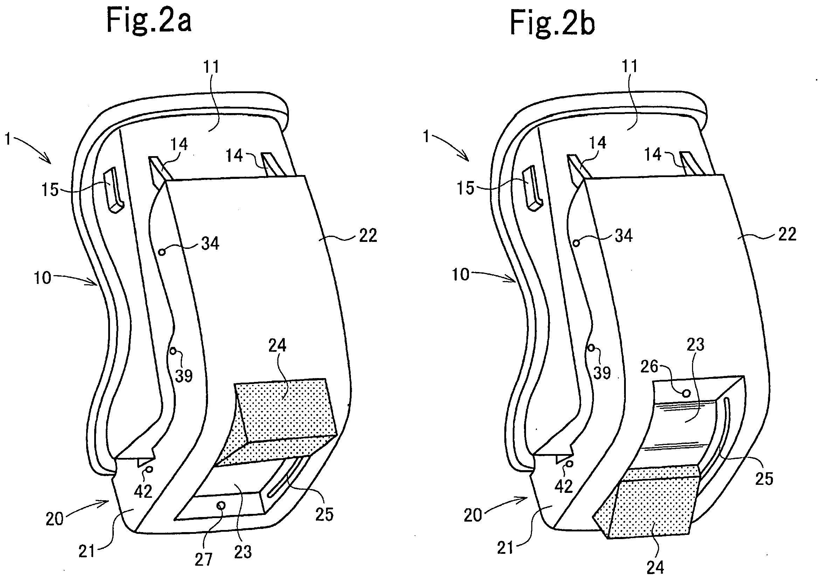

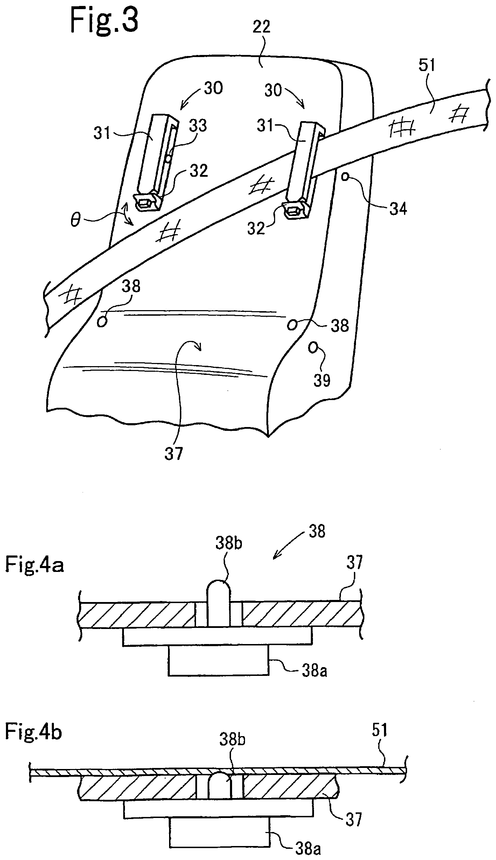

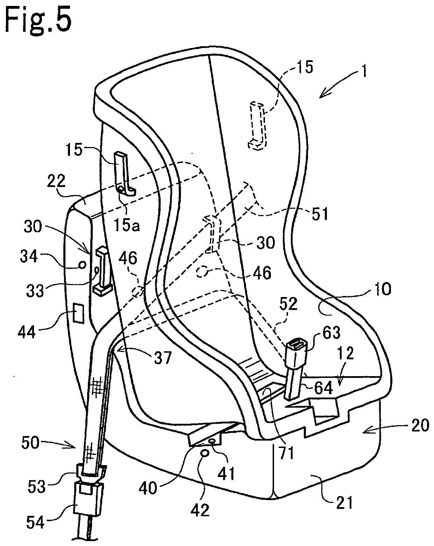

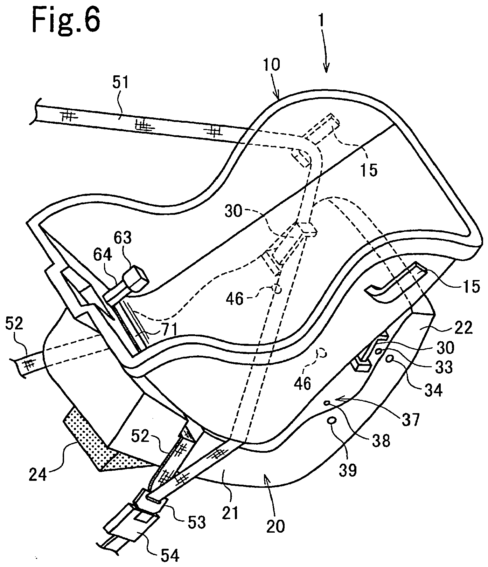

Fig. 1a is a perspective view of a front side of a child seat according to an embodiment. Fig. 1b is a vertical sectional view of a part where a lighting device is installed. Figs. 2a and 2b are perspective views of a rear surface side of a child seat body. Fig. 3 is a perspective view of an upper part of a back portion of a base. Figs. 4a and 4b are sectional views illustrating the structure of a limit switch. Figs. 5 and 6 are perspective views of the child seat with a seat belt routed around.

A child seat 1 includes a child seat body 10 and a base 20. The child seat body 10 is mounted to the base 20 such that the child seat body 10 is reclinable relative to the base 20. The child seat body 10 has a backrest portion 11 and a seat portion 12.

Two pairs of protrusion pieces 14 respectively protrude rearward from left and right sides of an upper part of a rear surface of the backrest portion 11. The protrusion pieces 14 are engaged with guide portions (not shown) of the base 20 such that the protrusion pieces 14 are slidable relative to the guide portions in an up-down direction.

Belt hook portions 15 are provided on left and right side surfaces of an upper part of the child seat body 10. The seat belt is hooked to the belt hook portions 15 when the child seat 1 is installed in a rear-facing installation state in which the child seat 1 faces a rear direction of an automobile. In the present embodiment, the belt hook portions 15 are each have an L-shaped hook-like shape in side view with an upper end open. In the present embodiment, the belt hook portions 15 are formed separately from the child seat body 10. A lower end part of each belt hook portion 15 is fastened to the corresponding side surface of the child seat body 10 using fastening devices such as bolts. The belt hook portions 15 may be integrally formed with the child seat body 10.

Lighting devices 46 are provided on the rear surface of the backrest portion 11 in order to illuminate a space between the backrest portion 11 and the base portion 20 when hooking the seat belt. In the present embodiment, the lighting devices 46 each include an LED and are each mounted in the backrest portion 11 using a light holder 47 as illustrated in Fig. 1b. Although the lighting devices 46 are disposed on the left and right sides of the backrest portion 11 near a middle position in the up-down direction of the backrest portion 11, the number and mounting positions of the lighting devices 46 are not limited to this. For example, a lighting device that illuminates an area under the seat portion 12 may be additionally provided. The lighting devices may use a light-emitting body other than the LED.

At a central part of a front portion of the seat portion 12, a buckle 63 is provided using a support member 64. Tongues of webbings for a child that restrain a child seated in the seat portion 12 are inserted into the buckle 63.

The base 20 has a substantially L-shape in side view and has a bottom portion 21 and a back portion 22. The back portion 22 is formed so as to rise from the bottom portion 21. The base 20 is provided with guide rails (not shown) that support the child seat body 10 such that the child seat body 10 is reclinable relative to the base 20.

As illustrated in Figs. 2a and 2b, a recess portion 23 is formed so as to extend from a bottom surface of the bottom portion 21 to a lower part of a back surface of the back portion 22. A bottom block 24 is engaged with the recess portion 23 such that the bottom block 24 is movable relative to the recess portion 23 in a front-rear direction. The recess portion 23 has guide grooves 25 that extend in the front-rear direction in left and right falling walls of the recess portion 23. The guide grooves 25 are engaged with guide pins (not shown) that protrude from both side surfaces of the bottom block 24 so as to allow the bottom block 24 to slide in the front-rear direction.

The bottom block 24 has a trapezoid-shaped vertical section in the front-rear direction. As illustrated in Fig. 2a, when the bottom block 24 is positioned at the rearmost part (rearmost seen from a child seated in the child seat) of the recess portion 23, the bottom block 24 protrudes downward from a rear part of the bottom surface of the bottom portion 21 so as to make the child seat 1 be suitable to a forward-facing installation. In order to detect that the bottom block 24 is positioned at the rearmost part, a limit switch 26 is provided in the recess portion 23.

When the bottom block 24 is positioned at the frontmost part, the bottom block 24 protrudes downward from a front part of the bottom surface of the bottom portion 21 as illustrated in Fig. 2b so as to make the child seat 1 be suitable to the rear facing installation. In order to detect that the bottom block 24 is positioned at the frontmost part, a limit switch 27 is provided in the recess portion 23. In a state illustrated in Fig. 2b, the thickness of the bottom block 24 increases toward the front, and the height from the bottom portion 21 increases toward the front.

As illustrated in Fig. 3, belt routing portions 30 are provided on left and right sides of a front surface of the upper part of the back portion 22. The belt routing portions 30 each have a hook portion 31 having an inverted L-shape and a lock portion 32 that is engaged with a lower end of the hook portion 31. Each lock portion 32 is secured by a hinge (not shown) so as to be pivotable in directions indicated by the arrow θ.

When the lock portion 32 is pivoted downward, a shoulder webbing 51 of the seat belt can be inserted into or removed out of the belt routing portion 30. Each belt routing portion 30 is provided with a limit switch 33 in order to detect the seat belt routed therethrough. LED units 34 are provided at positions close to the belt routing portions 30 in side surfaces of the upper part of the back portion 22. Each LED unit 34 includes a pair of red and blue LEDs and is configured such that the LED unit 34 can be turned on to emit red or blue light in accordance with commands from a control circuit, which will be described later. In detail, in the present embodiment, the LED units 34 emit red light when the child seat 1 is installed so as to face a forward direction, and emit blue light when the child seat 1 is installed so as to face the rear direction.

An upwardly facing step-like belt routing portion 37 is provided on each of the left and right sides on the front surface of the back portion 22 at a middle position in the up-down direction. Each belt routing portion 37 is provided with a limit switch 38 that detects the seat belt. The limit switches 38 are disposed in left and right edge parts in the front surface of the back portion 22. A Red LED 39 is provided near the belt routing portions 37 in each of the left and right side surfaces of the back portion 22.

Figs. 4a and 4b illustrate an installation structure of the limit switch 38. Each limit switch 38 includes a main body portion 38a and an actuator 38b. The main body portion 38a is mounted on a back side of the belt routing portion 37. The actuator 38b protrudes from the main body portion 38a to a front surface of the belt routing portion 37 as illustrated in Fig. 4a. As illustrated in Fig. 4b, the limit switch 38 is turned on when the actuator 38b is pushed by the seat belt 51 and retracted. Other limit switches have a similar structure, although they are not illustrated in the drawings.

As illustrated in Fig. 1a, a belt routing portion 40 is formed in an upper surface of the front part of the bottom portion 21. The belt routing portion 40 includes a groove that extends from a left side to a right side of the bottom portion 21. Limit switches 41 that detect the seat belt are provided at left and right ends of the belt routing portion 40. On each side surface of the child seat body 10, a blue LED 42 is provided at a position close to the belt routing portion 40.

A start switch 44 is provided at the side surface of the back portion 22 of the base 20. The start switch 44 causes the lighting devices 46 and the LEDs to start lighting (blinking in the present embodiment). The control circuit and a dry battery are mounted on the base 20, although these are omitted in the drawings. The control circuit is connected to the LEDs, the limit switches, and the start switch 44 through lead wires. The dry battery supplies power to the control circuit. The method of supplying the power (a power source) to the control circuit is not limited to the dry battery. A lithium battery may be used instead of the dry battery. Alternatively, instead of providing an internal power source such as the dry battery or the lithium battery in the child seat 1, an external power source such as a vehicle battery may be used to supply the power to the control circuit through, for example, a cigarette lighter socket of a vehicle.

As illustrated in Figs. 5 and 6, in a seat belt 50 of a seat belt device of the automobile, one side of a tongue 53 is the shoulder belt 51 and the other side of the tongue 53 is a lap belt 52. The tongue 53 can be attached (latched) to a buckle 54. The shoulder belt 51 is hooked between the buckle 54 of a seat of a vehicle and a shoulder anchor (not shown) provided at an upper position diagonally opposite the buckle 54. The seat belt 50 is withdrawn from a seat belt retractor (not shown) equipped with an automatic lock mechanism. The automatic lock mechanism is a mechanism that, after a seat belt withdrawing operation has stopped, allows the seat belt only to be retracted while preventing the seat belt from being withdrawn until the tongue is pulled out of the buckle.

A procedure for securing the child seat 1 to the seat of the automobile using the seat belt 50 will be described below.

When the child seat 1 is installed so as to face the forward direction, the bottom block 24 is positioned at the rearmost part of the recess portion 23 as illustrated in Fig. 2a. The child seat 1 is placed on the seat so as to face a forward direction of the automobile. The back portion 22 is pressed against a seat back of the seat. Then, the start switch 44 is pressed. As a result, the lighting devices 46 are turned on so as to illuminate a rear-side space between the child seat body 10 and the back portion 22 of the base 20, and the red LEDs 39 blink. Then the user inserts the tongue 53 into the space between the child seat body 10 and the back portion 22, routes the seat belt 50 through this space, and inserts the tongue 53 into the buckle 54 such that the tongue 53 is latched to the buckle 54. In so doing, since the lighting devices 46 are turned on, an operation of routing the seat belt 50 in the rear side space can be easily performed.

After the tongue 53 is latched to the buckle 54, the lap belt 52 is routed along the belt routing portions 37. As a result, the lap belt 52 contacts the limit switches 38, and the fact that the lap belt 52 has been routed along the belt routing portions 37 is detected. This causes the LEDs 39 to be turned off. Instead, the LED units 34 at the upper position blink. As described above, when the child seat 1 is installed so as to face the forward direction, the LED units 34 blink red, which is the same color as the color of light emitted by the LEDs 39. Then, the user hooks the shoulder belt 51 through the belt routing portion 30 as illustrated in Figs. 3 and 5. As a result, the shoulder belt 51 comes into contact with the corresponding limit switch 33, thereby turning off the LED units 34. As a result, all the LEDs and the LED units that guide the routing of the belts have been turned off. Thus, the fact that the child seat 1 has been mounted on the seat by the seat belt 50 is recognizable. The lighting devices 46 may be turned off along with turning off of the LED units 34. Thus, the fact that the child seat 1 has been mounted on the seat using the seat belt 50 is recognizable due to turning off of the lighting devices 46.

Next, a procedure for installing the child seat 1 so as to face the rear direction will be described with reference to Fig. 6.

In this case, the bottom block 24 is positioned at the frontmost part of the recess portion 23 as illustrated in Fig. 2b. The child seat 1 is placed on the seat so as to face the rear direction of the automobile, that is, the child seat 1 is placed such that, when a child is seated in the child seat 1, the child faces the rear direction of the automobile.

When the start switch 44 is pressed, the lighting devices 46 are turned on, and the blue LEDs 42 blink. Then the user routes the tongue 53 and the lap belt 52 into a space between the child seat body 10 and the bottom portion 21, and inserts the tongue 53 into the buckle 54 such that the tongue 53 is latched to the buckle 54. The lap belt 52 is also routed along the belt routing portion 40. As a result, the lap belt 52 contacts the limit switches 41. This causes the LEDs 42 to be turned off and the LED units 34 to blink. As described above, when the child seat 1 is installed so as to face the rear direction, the LED units 34 blink blue, which is the same color as the color of light emitted by the LEDs 42. Then, as illustrated in Fig. 6, that is, out of the left and right belt hook portions 15 of the child seat body 10, the user hooks the shoulder belt 51 in the belt hook portion 15 positioned on the shoulder anchor side of the vehicle. The user diagonally routes the shoulder belt 51 behind the child seat body 10, and hooks the intermediate portion of the shoulder belt 51 through the belt routing portion 30 on the shoulder anchor side. Since the lighting devices 46 are turned on, the user can easily route the shoulder belt 51 in the space between the child seat body 10 and the back portion 22 and hook the shoulder belt 51 in the belt routing portion 30. When the shoulder belt 51 comes into contact with the limit switches 33, the LED units 34 are turned off. As a result, all the LEDs and the LED units that guide the routing of the belts have been turned off. Thus, the fact that the child seat 1 has been secured to the seat by the seat belt 50 is recognizable. In the present embodiment, the lighting devices 46 are turned off along with turning off of the LED units 34. Thus, the fact that the child seat 1 has been mounted on the seat using the seat belt 50 is also recognizable due to turning off of the lighting devices 46.

The seat belt 50 may loosen after the child seat 1 has been mounted on the seat using the seat belt 50 as illustrated in Figs. 5 and 6 as a result of such a situation as the child seat 1 being pressed against the seat. In the present embodiment, the child seat 1 is configured such that, when the seat belt becomes undetectable by any one of the limit switches due to such looseness, the LED or LED unit (or every LED or LED unit) near this limit switch blinks. Thus, loosening of the seat belt 50 is announced to the user.

In the present embodiment, the LEDs 39 or 42 continue to blink and lighting devices 46 continue to be turned on from a time when the start switch 44 is pressed to a time when one of the limit switches first detects the seat belt. However, since turning on of the LEDs 39 or 42 and the lighting devices 46 for an excessively long time causes battery power to be quickly drained, the child seat 1 is configured such that the lights are turned off when five minutes have elapsed from the time when the start switch 44 is pressed.

In the present embodiment, the forward-facing installation and the rear-facing installation are switched by sliding the bottom block 24 back and forth. Alternatively, the forward-facing and rear-facing installations may be switched by pivoting the bottom block back and forth as disclosed in the above-described Japanese Unexamined Patent Application Publication No. 2003-252094. The child seat disclosed in the above document refers to "a child seat that is installed on a seat of an automobile, comprising a child seat body, and a bottom block that is pivotably attached to a bottom portion of the child seat body and used to adjust an installation angle, wherein one end of the bottom block is pivotably attached to the child seat body such that the bottom block is able to enter a first state and a second state, wherein the bottom block overlaps a front half side of a bottom surface of the child seat body in the first state, wherein the bottom block overlaps a rear half side of the bottom portion of the child seat body in the second state, wherein the bottom block has the other end having a thickness greater than that of the one end".

In the present invention, the rear-facing installation state may be recognized due to detection of the fact that the child seat body 10 has been deeply reclined using a limit switch or the like, and the forward-facing installation state may be recognized due to detection of the fact that the child seat body 10 has been elected.

In the above-described embodiment, the LEDs blink. Alternatively, the LEDs may be continuously turned on.

In the above-described embodiment, the LEDs on the left and right sides are simultaneously turned on. However, the LEDs on only one of the left and right sides may be turned on by switching between a case in which the child seat 1 is installed on a seat on the left side of the automobile and another case in which the child seat 1 is installed on a seat on the right side of the automobile using a switch.

In the above-described embodiment, the child seat 1 is configured as follows. That is, when the start switch 44 is pressed, the lighting devices 46 are initially turned on, and the LEDs 39 for the belt routing portions 37 or the LEDs 42 for the belt routing portion 40, through which the seat belt is first to be routed, are turned on. Then, when it is detected that the seat belt has been routed through the belt routing portions 37 or 40, the LEDs 42 or the LEDs 39 are turned off, and the LED units 34 for the belt routing portion 30 through which the seat belt is to be routed next is instead turned on. The child seat 1 may alternatively be configured such that, when the child seat 1 is installed so as to face the forward or rear direction, the LEDs and LED units for all the corresponding belt routing portions through which the seat belt is to be routed are turned on, and every time the seat belt is routed through a particular belt routing portion, the LEDs or the LED units for the particular belt routing portion are turned off.

In the present invention, when a tongue of a webbing for a child is inserted into a buckle for a child, a tongue insertion opening of the buckle for a child may be indicated by a light-emitting body such as an LED.

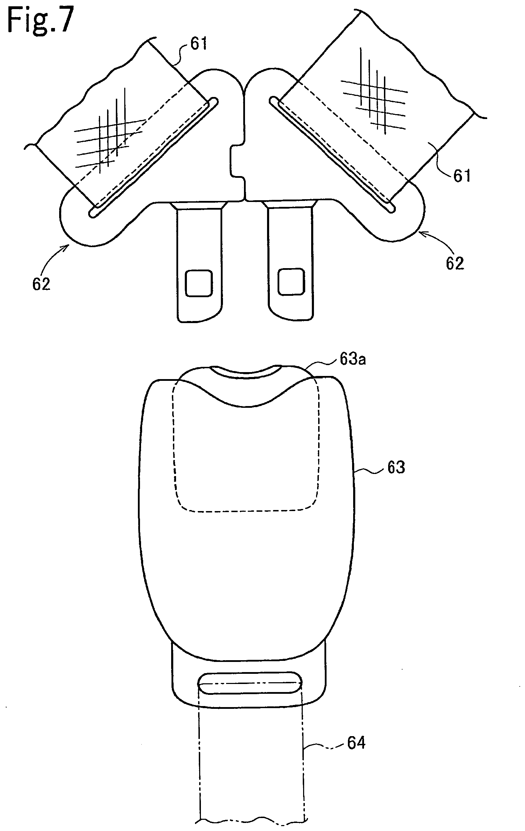

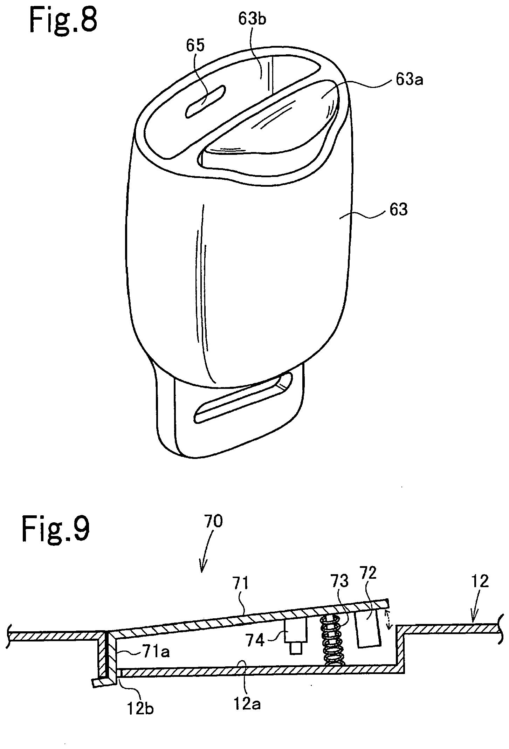

Figs. 7 to 9 illustrate an example of this structure. Fig. 7 is a front view of the buckle 63 and tongues 62, Fig. 8 is a perspective view of the buckle 63, and Fig. 9 is a sectional view of a child seating detection device.

As illustrated in Fig. 7, the tongues 62 are attached to shoulder webbings 61 for a child. The tongues 62 are inserted into the buckle 63. As illustrated in Fig. 1a, the buckle 63 is mounted at the front part on the seat portion 12 of the child seat body 10 using the support member 64.

As illustrated in Fig. 8, an insertion opening 63b into which the tongues 62 are inserted is formed on a rear side of an upper end surface of the buckle 63. When the tongues 62 are inserted into the insertion opening 63b, the tongues 62 are latched by latch mechanisms (not shown) in the buckle 63. Inside the buckle 63, latch sensors (not shown) are provided in order to detect latching of the tongues 62. A press button 63a is disposed on the front side of the upper end surface of the buckle 63. When the press button 63a is pressed, this latching is released and the tongues 62 are pushed upward so as to be detached from the insertion opening 63b by an operation of return springs of the latch mechanisms.

An LED 65 serving as a light-emitting body is provided on a rear side of an upper inner surface of the insertion opening 63b so as to illuminate inside the insertion opening 63b. The LED 65 is turned on (may be continuously turned on or may blink) when a child is seated in the seat portion 12, and turned off when the tongues 62 are attached to the buckle 63 or a specified period of time has elapsed after a time when the child is seated. In order to detect that the child is seated, a seating detection device 70 is provided in the seat portion 12 of the child seat body 10. As illustrated in Fig. 9, the seating detection device 70 includes a recess portion 12a, a plate 71, a stopper 72, a return spring 73, and a limit switch 74. The recess portion 12a is formed in a part of the seat portion 12 on which the bottom of the child is placed, and the plate 71 covers the recess portion 12a. The stopper 72, the return spring 73, and the limit switch 74 are provided on a lower surface of the plate 71.

The plate 71 has an L-shaped leg portion 71a that protrudes downward from a rear edge of the plate 71. The leg portion 71a is inserted into and hooked to an opening 12b formed in a rear edge of a bottom surface of the recess portion 12a. The plate 71 is pivotable about the opening 12b as the pivot in the up-down direction. The plate 71 has a size such that the plate 71 can be fitted into the recess portion 12a. The return spring 73 includes a coil spring that is disposed between a bottom surface of the recess portion 12a and the plate 71, and urges the plate 71 toward a direction in which the plate 71 is pushed up. The stopper 72 includes a protrusion having a height with which the stopper 72 contacts the bottom surface of the recess portion 12a when the plate 71 is flush with part of the seat portion 12 that surrounds the recess portion 12a.

The limit switch 74 is provided such that, when the plate 71 is flush with the seat portion 12, the limit switch 74 is brought into contact with the bottom surface of the recess portion 12a and turned on, and when the plate 71 is pushed upward by the return spring 73, the limit switch 74 is turned off.

When the child is seated in the seat portion 12, the plate 71 is pushed down so as to turn the limit switch 74 on. In this state, when the child leaves the seat portion 12, the plate 71 is pushed up so as to turn the limit switch 74 off.

A control device and a dry battery are mounted in the child seat body 10. The control device turns the LED 65 on and off in accordance with input signals received from the limit switch 74 of the seating detection device 70 and the latch sensors of the buckle 63. The dry battery supplies the power to the control device. When the seating detection device 70 detects that the child is seated, the LED 65 blinks for a specified period of time (for example, 60 seconds to 5 minutes). When the tongues 62 are inserted into the buckle 63, the latch sensors detect the insertion and the LED 65 is turned off. As described above, when the child is seated in the child seat 10, the LED 65 at the insertion opening of the buckle 63 blinks. Thus, the insertion opening 63b, into which the tongues 62 are to be inserted, can be easily recognized, and the user is motivated to insert the tongues 62 into the insertion opening 63b. In addition, since the LED 65 is turned off when the tongues 62 are latched to the buckle 63, insertion of the tongues 62 into the buckle 63 can be recognized.

According to the present invention, when the seat belt has been correctly routed and every specified limit switch detects the seat belt in the forward-facing installation state or the rear-facing installation state, a lamp that indicates that the seat belt has been correctly routed (OK lamp) may be turned on (or may blink) for a specified period of time. The OK lamp includes, for example, a green LED.

Furthermore, a lamp that indicates that the routing of the seat belt is not complete (incomplete lamp) may be turned on (or may blink) when the start switch 44 is pressed, and the incomplete lamp may be turned off when the seat belt has been correctly routed. The OK lamp may be turned on for a specified period of time upon turning off of the incomplete lamp. The incomplete lamp may use, for example, a yellow LED.

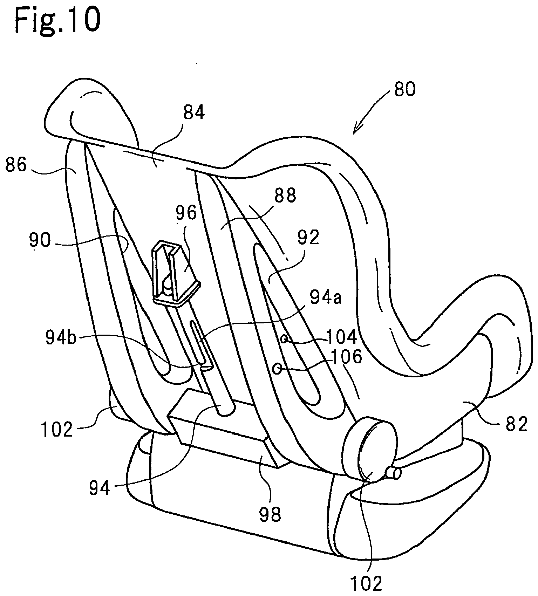

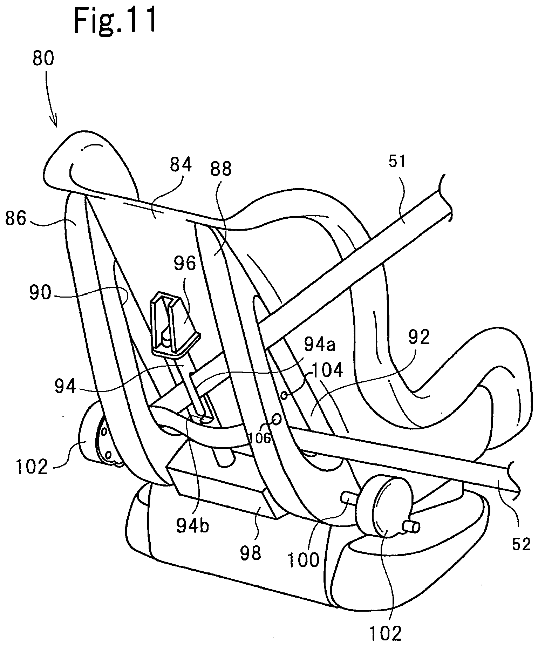

A child seat 80 according to another embodiment will be described below with reference to Figs. 10 and 11. The child seat 80 is secured to the automobile seat with the seat belt 50 by applying tensile force. Tensile force is applied to the seat belt 50 by retracting the seat belt 50 using a retractor shaft 94. Fig. 10 is a perspective view of the child seat seen from the rear side. Fig. 11 is a perspective view illustrating a state in which the shoulder belt 51 of the three-point seat belt 50 is inserted into a slit for a shoulder belt of the retractor shaft of the child seat.

The child seat 80 includes a seat portion 82, a backrest portion 84, ribs 86 and 88, seat belt routing openings 90 and 92, and the retractor shaft 94. A child occupant sits in the seat portion 82. The ribs 86 and 88 are formed on the backrest portion 84 so as to rearwardly protrude from left and right side edges of a rear surface of the backrest portion 84. The seat belt routing openings 90 and 92 are formed in the ribs 86 and 88, respectively. The retractor shaft 94 retracts the seat belt.

The retractor shaft 94 extends in the up-down direction along the backrest portion 84 near the central part of the backrest portion 84. The retractor shaft 94 has a slit 94a with which the seat belt 50 is engaged.

The slit 94a diametrically penetrates the retractor shaft 94 and extends in the axial direction (up-down direction) of the retractor shaft 94. The slit 94a has a cutout-shaped belt access opening 94b formed at a lower end thereof.

Each of the ribs 86 and 88 extends along the rear surface of the backrest portion 84 in the up-down direction. Each of the seat belt routing openings 90 and 92 also extends along the backrest portion 84 in the up-down direction.

An upper end side of the retractor shaft 94 is supported by a bracket 96 that is attached to the rear surface of the backrest portion 84 such that the retractor shaft 94 is rotatable about the axis of the retractor shaft 94 relative to the bracket 96. A lower end of the retractor shaft 94 is inserted into a mechanical box 98 that is provided in a lower part of the backrest portion 84. The retractor shaft 94 is rotated by rotation of a hand-wheel 102 using a worm wheel mechanism provided in the mechanical box 98 and a shaft 100.

Lighting devices 104 are provided so as to illuminate an area near the slit 94a. In the present embodiment, the lighting devices 104 include LEDs and disposed in portions on the left and right sides of the slit 94a in the rear surface of the backrest portion 84. When the lighting devices 104 are disposed in these portions, the area near the slit 94a can be sufficiently illuminated from both the left and right sides. In addition, when an operator tries to route the seat belt 50 behind the backrest portion 84, illuminating light does not directly strike the eyes of the operator. Thus, the operator is not dazzled by the light.

Switches 106, which turn on the lighting devices 104, are provided on outwardly facing side surfaces of the ribs 86 and 88. When the switch 106 is pressed, the lighting devices 104 are turned on for a specified period of time (for example, 5 to 10 minutes), and then automatically turned off. When the switch 106 is pressed again while the lighting devices 104 are turned on, the lighting device 104 are turned off. A circuit that controls turning on and off of the lighting devices 104 and a battery is disposed in an appropriate space such as a space in the mechanical box 98 or spaces in the ribs 86 and 88.

A procedure for installing the child seat 80 on the seat will be described below.

The child seat 80 is placed on the seat of the automobile, and the switch 106 is pressed to turn the lighting devices 104 on. Then, the lap belt 52 and the shoulder belt 51 of the seat belt 50 are routed from one of the seat belt routing openings 90 and 92 to the other of the seat belt routing openings 90 and 92, then the tongue (not shown) are latched to the buckle (not shown). After that, as illustrated in Fig. 11, an intermediate portion of the shoulder belt 51 is inserted into the slit 94a through the belt access opening 94b of the retractor shaft 94.

Then, the hand-wheel 102 is rotated to rotate the retractor shaft 94, in order to retract the shoulder belt 51 on the retractor shaft 94 until sufficient tensile force is applied to the entire seat belt 50. Thus, the child seat 80 is firmly secured to the seat of the automobile.

Since this series of operations typically take about 5 minutes to complete, the lighting devices 104 remain turned on during the mounting of the child seat. Thus, operations performed behind the backrest portion 84 such as engagement of the shoulder belt 51 with the slit 94a can be efficiently performed. After that, the lighting devices 104 are automatically turned off. Thus, battery power is not wasted.

Mounting positions and the numbers of the lighting devices 104 and the switches 106 are not limited to those illustrated in Figs. 10 and 11.

In the present invention, a fluorescent coating may be applied to the retractor shaft 94, particularly near the slit 94a, so as to clearly indicate a portion through which the seat belt is to be routed. The rear surface of the backrest portion 84 may be light toned so as to improve effects of illumination with the lighting devices 104.

It should be understood that the above-described embodiments are examples of the present invention and the present invention may be embodied other than illustrated in the drawings.

Although the present invention has been described in detail using specific embodiments, it will be appreciated by those skilled in the art that a variety of changes are possible within the scope of the present invention as defined in the following claims.

## Claims

1. A child seat (1) that is mounted on a seat of an automobile by routing a seat belt (50) of the automobile in a seat belt routing region,
**characterized in that** the child seat (1) comprises
a lighting device (46) that illuminates at least part of the seat belt routing region,
a child seat body (10) that has a seat portion (12) and a backrest portion (11), and
a base (20) that supports the child seat body (10),
wherein the lighting device (46) is disposed so as to illuminate at least a rear side of the backrest portion (11).

2. The child seat (1) according to Claim 1, further comprising a retractor member that is disposed at the rear side of the backrest portion (11) and that retracts the seat belt (50) in order to apply tensile force to the seat belt (50),
wherein the lighting device (46) is disposed so as to illuminate at least an engagement portion of the retractor member that is engaged with the seat belt (50).

3. The child seat (1) according to any one of Claims 1 and 2, further comprising a switch that causes the lighting device (46) to start lighting, and light controlling means that causes the lighting device (46) to be turned off when routing of the seat belt (50) is complete, or after a specified period of time has elapsed from a time when the switch is operated.

4. The child seat (1) according to any one of Claims 1 to 3, wherein the child seat (1) has a plurality of belt routing portions (30, 37, 40), the belt routing portions (30, 37, 40) through which the seat belt (50) of the automobile is routed in order to mount the child seat (1) on the seat of the automobile,
wherein a light-emitting body is provided, the light-emitting body being turned on, in mounting the child seat (1) on the seat of the automobile, so as to indicate the belt routing portion (30, 37, 40) through which the seat belt (50) is to be routed.

5. The child seat (1) according to Claim 3, wherein the child seat (1) has a plurality of belt routing portions (30, 37, 40), the belt routing portions (30, 37, 40) through which the seat belt (50) of the automobile is routed in order to mount the child seat (1) on the seat of the automobile,
wherein a light-emitting body is provided, the light-emitting body being turned on, in mounting the child seat (1) on the seat of the automobile, so as to indicate the belt routing portion (30, 37, 40) through which the seat belt (50) is to be routed, wherein the child seat (1) includes light-emitting body controlling means that causes the light-emitting body to be turned on when the switch is operated.

6. The child seat (1) according to Claim 5, further comprising belt detection devices provided for respective belt routing portions (30, 37, 40),
wherein the light-emitting body controlling means controls the light-emitting bodies such that the light-emitting body controlling means first causes the light-emitting body corresponding to the first belt routing portion (30, 37, 40) to be turned on, the first belt routing portion (30, 37, 40) being a belt routing portion (30, 37, 40) through which the seat belt (50) is first to be routed, the light-emitting body controlling means causing, when the belt detection device for the first belt routing portion (30, 37, 40) detects that the seat belt (50) has been routed through the first belt routing portion (30, 37, 40), the light-emitting body corresponding to the first belt routing portion (30, 37, 40) to be turned off, the light-emitting body controlling means then causing the light-emitting body corresponding to the second belt routing portion (30, 37, 40) to be turned on, the second belt routing portion (30, 37, 40) being a belt routing portion (30, 37, 40) through which the seat belt (50) is next to be routed, the light-emitting body controlling means causing the light-emitting body corresponding to the second belt routing portion (30, 37, 40) to be turned off when the belt detection device for the second belt routing portion (30, 37, 40) detects that the seat belt (50) has been routed through the second belt routing portion (30, 37, 40).

7. The child seat (1) according to Claim 6,
further comprising installation direction detecting means that detects whether the child seat (1) is installed so as to face a forward direction or a rear direction of the automobile,
wherein, as the belt routing portions (30, 37, 40), the child seat (1) includes a belt routing portion (30, 37, 40) for a forward-facing installation through which the seat belt (50) is routed when the child seat (1) is installed so as to face a forward direction, and a belt routing portion (30, 37, 40) for a rear-facing installation through which the seat belt (50) is routed when the child seat (1) is installed so as to face a rear direction,
wherein the light-emitting body controlling means causes, in accordance with an installation direction detected by the installation direction detecting means, either of the light-emitting body for the belt routing portion (30, 37, 40) for the forward-facing installation and the light-emitting body for the belt routing portion (30, 37, 40) for the rear-facing installation to be turned on.

8. The child seat (1) according to any one of Claims 1 to 7, wherein the lighting device (46) includes an LED.

## Patentansprüche

1. Kindersitz (1), der an einem Sitz eines Kraftfahrzeugs angebracht ist, indem ein Sitzgurt (50) des Kraftfahrzeugs in einem Sitzgurtführungsbereich geführt wird,
**dadurch gekennzeichnet, dass** der Kindersitz (1) aufweist:
eine Beleuchtungseinrichtung (46), die zumindest einen Teil des Sitzgurtführungsbereichs beleuchtet,
einen Kindersitzkörper (10), der zumindest einen Sitzabschnitt (12) und einen Rückenlehnabschnitt (11) aufweist,
eine Basis (20), die den Kindersitzkörper (10) trägt,
wobei die Beleuchtungseinrichtung (46) derart angeordnet ist, dass sie zumindest eine Rückseite des Rückenlehnabschnitts (11) beleuchtet.

2. Kindersitz (1) nach Anspruch 1, ferner aufweisend eine Rückzugseinrichtung, die an der Rückseite des Rückenlehnabschnitts (11) angeordnet ist und die den Sitzgurt (50) zurückzieht, um eine Zugkraft auf den Sitzgurt (50) auszuüben,
wobei die Beleuchtungseinrichtung (46) angeordnet ist, um mindestens einen Eingriffsabschnitt der Rückzugseinrichtung, die mit dem Sitzgurt (50) in Eingriff ist, zu beleuchten.

3. Kindersitz (1) nach einem der Ansprüche 1 und 2, ferner aufweisend einen Schalter, der veranlasst, dass die Beleuchtungseinrichtung (46) zu leuchten beginnt, und eine Lichtsteuereinrichtung, die veranlasst, dass die Beleuchtungseinrichtung (46) ausgeschaltet wird, wenn das Führen des Sitzgurtes (50) abgeschlossen ist, oder nachdem eine bestimmte Zeitspanne seit dem Zeitpunkt, an dem der Schalter betätigt wurde, verstrichen ist.

4. Kindersitz (1) nach einem der Ansprüche 1 bis 3, wobei der Kindersitz (1) eine Mehrzahl an Gurtführungsabschnitten (30, 37, 40) aufweist, wobei die Gurtführungsabschnitte (30, 37, 40) durch den Sitzgurt (50) des Kraftfahrzeugs geführt sind, um den Kindersitz (1) auf dem Sitz des Kraftfahrzeugs zu befestigen,
wobei ein Licht emittierender Körper bereitgestellt wird, wobei der Licht emittierende Körper beim Befestigen des Kindersitzes (1) auf dem Sitz des Kraftfahrzeugs eingeschaltet wird, um den Gurtführungsabschnitt (30, 37, 40) anzuzeigen, durch den der Sitzgurt (50) geführt werden soll.

5. Kindersitz (1) nach Anspruch 3, wobei der Kindersitz (1) eine Mehrzahl an Gurtführungsabschnitten (30, 37, 40) aufweist, wobei die Gurtführungsabschnitte (30, 37, 40) durch den Sitzgurt (50) des Kraftfahrzeugs geführt sind, um den Kindersitz (1) auf dem Sitz des Kraftfahrzeugs zu befestigen,
wobei ein Licht emittierender Körper vorgesehen ist, wobei der Licht emittierende Körper beim Befestigen des Kindersitzes (1) auf dem Sitz des Kraftfahrzeuges eingeschaltet wird, um den Gurtführungsabschnitt (30, 37, 40) anzuzeigen, durch den der Sitzgurt (50) geführt werden soll, wobei der Kindersitz (1) die Licht emittierenden Steuerungsmittel umfasst, die den Licht emittierenden Körper veranlassen eingeschaltet zu werden, sobald der Schalter betätigt wird.

6. Kindersitz (1) nach Anspruch 5, ferner aufweisend Gurterfassungseinrichtungen, vorgesehen für zugehörige Gurtführungsabschnitte (30, 37, 40),
wobei die Licht emittierenden Steuerungsmittel die Licht emittierenden Körper derart steuern, dass die Licht emittierenden Steuerungsmittel zunächst den Licht emittierenden Körper, welcher zu dem ersten Gurtführungsabschnitt (30, 37, 40) zugehörig ist, dazu veranlassen, eingeschaltet zu werden, wobei der erste Gurtführungsabschnitt (30, 37, 40) ein Gurtführungsabschnitt (30, 37, 40) ist, durch den der Sitzgurt (50) zuerst zu führen ist, wobei, wenn die Gurterkennungseinrichtung des ersten Gurtführungsabschnitts (30, 37, 40) erkennt, dass der Sitzgurt (50) durch den ersten Gurtführungsabschnitt (30, 37, 40) geführt worden ist, die Licht emittierenden Steuerungsmittel den Licht emittierenden Körper, welcher zu dem ersten Gurtführungsabschnitt (30, 37, 40) zugehörig ist, veranlassen ausgeschaltet zu werden, wobei die Licht emittierenden Steuerungsmittel dann den Licht emittierenden Körper, welcher zu dem zweiten Gurtführungsabschnitt (30, 37, 40) zugehörig ist, veranlassen eingeschaltet zu werden, wobei der zweite Gurtführungsabschnitt (30, 37, 40) ein Gurtführungsabschnitt (30, 37, 40) ist, durch welchen der Sitzgurt (50) als nächstes geführt wird, wobei die Licht emittierenden Steuerungsmittel den Licht emittierenden Körper, welcher zu dem zweiten Gurtführungsabschnitt (30, 37, 40) zugehörig ist, veranlassen ausgeschaltet zu werden, sobald die Gurterfassungseinrichtung für den zweiten Gurtführungsabschnitt (30, 37, 40) erkennt, dass des Sitzgurt (50) durch den zweiten Gurtführungsabschnitt (30, 37, 40) geführt wird.

7. Kindersitz (1) nach Anspruch 6,
ferner aufweisend Einbaurichtungs-Erfassungsmittel, die erfassen, ob der Kindersitz (1) so eingebaut ist, dass er einer Vorwärtsrichtung oder einer Rückwärtsrichtung des Kraftfahrzeugs zugewandt ist,
wobei der Kindersitz (1), durch die Gurtführabschnitte (30, 37, 40), einen Gurtführabschnitt (30, 37, 40) für einen nach vorne gerichteten Einbau, durch den der Sitzgurt (50) geführt wird, wenn der Kindersitz (1) so eingebaut ist, dass er einer Vorwärtsrichtung zugewandt ist, und einen Gurtführungsabschnitt (30, 37, 40) für einen nach hinten gerichteten Einbau, durch den der Sitzgurt (50) geführt wird, wenn der Kindersitz (1) so eingebaut ist, dass er einer Rückwärtsrichtung zugewandt ist, aufweist,
wobei die Licht emittierenden Steuerungsmittel in Übereinstimmung mit einer Einbaueinrichtung, welche durch die Einbaurichtungs-Erfassungsmittel erfasst werden, veranlassen, entweder den Licht emittierenden Körper für den Gurtführungsabschnitt (30, 37, 40) des nach vorne weisenden Einbaus oder den Licht emittierenden Körper des Gurtführungsabschnitts (30, 37, 40) des nach hinten weisenden Einbaus einzuschalten.

8. Kindersitz (1) nach einem der Ansprüche 1 bis 7, wobei die Beleuchtungseinrichtung (46) eine LED aufweist.

## Revendications

1. Un siège pour enfant (1) qui est monté sur un siège d'une automobile en positionnant une ceinture de sécurité (50) de l'automobile dans une région de positionnement de la ceinture de sécurité,
**caractérisé en ce que** le siège pour enfant (1) comprend
- un dispositif d'éclairage (46) qui éclaire au moins une partie de la région de positionnement de la ceinture de sécurité,
- un corps de siège pour enfant (10) qui comporte une partie formant siège (12) et une partie formant dossier (11) et
- une base (20) qui supporte le corps de siège pour enfant (10),
dans lequel le dispositif d'éclairage (46) est disposé de manière à éclairer au moins un côté arrière de la partie formant dossier (11).

2. Le siège pour enfant (1) selon la revendication 1, comprenant en outre un élément de rétraction qui est disposé sur le côté arrière de la partie formant dossier (11) et qui rétracte la ceinture de sécurité (50) afin d'appliquer une force de traction sur la ceinture de sécurité (50), dans lequel le dispositif d'éclairage (46) est disposé de manière à éclairer au moins une partie d'engagement de l'élément rétracteur qui est en prise avec la ceinture de sécurité (50).

3. Le siège pour enfant (1) selon l'une quelconque des revendications 1 ou 2, comprenant en outre un interrupteur qui amène le dispositif d'éclairage (46) à produire l'éclairage, et un moyen de commande de la lumière qui provoque l'extinction du dispositif d'éclairage (46) lorsque le positionnement de la ceinture de sécurité (50) est réalisé ou après une période de temps définie qui s'est écoulée depuis que le commutateur a été actionné.

4. Le siège pour enfant (1) selon l'une quelconque des revendications 1 à 3, dans lequel le siège pour enfant (1) comporte une pluralité de parties de positionnement de la ceinture (30, 37, 40), parties de positionnement de la ceinture (30, 37, 40) par l'intermédiaire desquelles la ceinture de sécurité (50) de l'automobile est positionnée afin de monter le siège d'enfant (1) sur le siège de l'automobile, lequel est pourvu d'un corps émetteur de lumière, ce corps émetteur de lumière étant allumé, lors du montage du siège d'enfant (1) sur le siège de l'automobile, de manière à indiquer la partie de positionnement de la ceinture (30, 37, 40), par l'intermédiaire de laquelle la ceinture de sécurité (50) doit être positionnée.

5. Le siège pour enfant (1) selon la revendication 3, dans lequel le siège pour enfant (1) comporte une pluralité de parties de positionnement de la ceinture (30, 37, 40), ces parties de positionnement de la ceinture (30, 37, 40) par l'intermédiaire desquelles la ceinture de sécurité (50) de l'automobile est positionnée afin de monter le siège d'enfant (1) sur le siège de l'automobile,
lequel est pourvu d'un corps émetteur de lumière, ce corps émetteur de lumière étant allumé, lors du montage du siège d'enfant (1) sur le siège de l'automobile, de manière à indiquer la partie de positionnement de la ceinture (30, 37, 40), par l'intermédiaire de laquelle la ceinture de sécurité (50) doit être positionnée,
dans lequel le siège d'enfant (1) inclut les moyens de commande du corps émetteur de lumière qui provoquent l'allumage du corp émetteur de lumière quand l'interrupteur est actionné.

6. Le siège pour enfant (1) selon la revendication 5, comprenant en outre des dispositifs de détection de ceinture dont les parties de positionnement de ceinture respectives (30, 37, 40) sont pourvues,
dans lequel les moyens de commande du corps émetteur de lumière commandent les corps émetteurs de lumière de telle sorte que les moyens de commande du corps émetteur de lumière tout d'abord conduisent à ce que le corps émetteur de lumière correspondant à la première partie de positionnement de la ceinture (30, 37, 40) soit allumée, cette première partie de positionnement de la ceinture (30, 37, 40) étant une partie de positionnement de la ceinture (30, 37, 40) par l'intermédiaire de laquelle la ceinture de sécurité (50) est la première à être positionnée, les moyens de commande du corps émetteur de lumière conduisant, lorsque le dispositif de détection de la ceinture pour la première partie de positionnement de la ceinture (30, 37, 40) détecte que la ceinture de sécurité (50) a été positionnée par l'intermédiaire de la première partie de positionnement de la ceinture (30, 37, 40), le corps émetteur de lumière correspondant à la première partie de positionnement de la ceinture (30, 37, 40) à s'éteindre, les moyens de commande du corps émettant de la lumière faisant alors en sorte que le corps émetteur de lumière correspondant à la deuxième partie de positionnement de la ceinture (30, 37, 40) soit allumé, la deuxième partie de positionnement de la ceinture (30, 37, 40), étant une partie de positionnement de la ceinture (30, 37, 40), par l'intermédiaire de laquelle la ceinture de sécurité (50) doit ensuite être positionnée, les moyens de commande du corps émettant de la lumière faisant que le corps émetteur de lumière correspondant à la deuxième partie de positionnement de la ceinture (30, 37, 40) s'éteigne, lorsque le dispositif de détection de la ceinture pour la deuxième partie de positionnement de la ceinture (30, 37, 40) détecte que la ceinture de sécurité (50) a été positionnée par l'intermédiaire de la deuxième partie de positionnement de la ceinture (30, 37, 40).

7. Le siège pour enfant (1) selon la revendication 6, comprenant en outre des moyens de détection de la direction d'installation qui détectent si le siège pour enfant (1) est installé de manière à faire face à une direction avant ou à une direction arrière de l'automobile,
dans lequel, comme parties de positionnement de la ceinture (30, 37, 40), le siège pour enfant (1) comprend une partie de positionnement de la ceinture (30, 37, 40) pour une installation orientée vers l'avant par laquelle la ceinture de sécurité (50) est positionnée lorsque le siège pour enfant (1) est installé de manière à faire face à une direction avant et une partie de positionnement de la ceinture (30, 37, 40) pour une installation orientée vers l'arrière par laquelle la ceinture de sécurité (50) est positionnée lorsque le siège pour enfant (1) est installé de manière à faire face à une direction arrière,
dans lequel les moyens de commande du corps émettant de la lumière font que, en accord avec une direction d'installation détectée par les moyens de détection de la direction d'installation, l'un ou l'autre parmi le corps émetteur de la lumière pour la portion de positionnement de la ceinture (30, 37, 40) pour une installation faisant face vers l'avant et le corps émetteur de la lumière pour la portion de positionnement de la ceinture (30, 37, 40) pour que l'installation faisant face à l'arrière s'éteigne.

8. Le siège pour enfant (1) selon l'une quelconque des revendications 1 à 7, dans lequel le dispositif d'éclairage (46) inclut un LED.
